(19) Europäisches Patentamt
European Patent Office
Office européen des brevets

(11) **EP 3 009 654 A1**

(12) **EUROPEAN PATENT APPLICATION**
published in accordance with Art. 153(4) EPC

(43) Date of publication:
**20.04.2016 Bulletin 2016/16**

(51) Int Cl.:
*F02M 37/00* (2006.01)   *F02D 19/08* (2006.01)
*F02M 21/02* (2006.01)   *F02M 69/00* (2006.01)
*F02M 69/14* (2006.01)

(21) Application number: **14810326.0**

(22) Date of filing: **26.05.2014**

(86) International application number:
**PCT/JP2014/063805**

(87) International publication number:
**WO 2014/199805 (18.12.2014 Gazette 2014/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.06.2013 JP 2013121766**

(71) Applicant: **Isuzu Motors, Ltd.**
**Shinagawa-Ku**
**Tokyo 140-8722 (JP)**

(72) Inventor: **TOKUMARU,Takeshi**
**Fujisawa-shi**
**Kanagawa 252-0881 (JP)**

(74) Representative: **WSL Patentanwälte Partnerschaft
mbB**
**Kaiser-Friedrich-Ring 98**
**65185 Wiesbaden (DE)**

(54) **MIXED FUEL SUPPLY SYSTEM FOR INTERNAL COMBUSTION ENGINE, VEHICLE, AND MIXED FUEL SUPPLY METHOD FOR INTERNAL COMBUSTION ENGINE**

(57)    Provided is a mixed fuel supply system configured by providing a DME tank (a liquefied gas fuel storage tank) 14 which stores DME and a DME supply path (a liquefied gas fuel supply path) 15 which supplies the DME in addition to a configuration of a light oil supply system 8 of a conventional technique, in which the DME supply path 15 is connected to a transfer path 7 between a feed pump 4 and a fuel injection pump 6a, and the DME supply path 15 includes a flow regulating valve 16, in which a supply amount $Q_{DME}$ of the DME is regulated to be approximately 10% of a total supply amount $Q_{fuel}$ of a mixed fuel in weight ratio by the flow regulating valve 16, and the mixed fuel mixed in the transfer path 7 is transferred to the fuel injection pump 6a, and then injected from injectors 5. This makes it possible to supply the mixed fuel obtained by mixing the liquid fuel and the liquefied gas fuel to an internal combustion engine by utilizing the fuel supply circuit and the fuel injection circuit for the liquid fuel as they are without making significant modifications.

Fig.1

**Description**

TECHNICAL FIELD

The present invention relates to a mixed fuel supply system for an internal combustion engine, a vehicle, and a mixed fuel supply method for an internal combustion engine, for supplying a mixed fuel obtained by mixing a liquid fuel, such as light oil, and a liquefied gas fuel, such as dimethyl ether (hereinafter referred to as DME) to an internal combustion engine.

BACKGROUND ART

Liquefied gas fuels such as dimethyl ether (DME) have attracted attention for use as alternative fuels to liquid fuels such as light oil, which is used for diesel engines. The DME is a fuel having a high cetane number, and also having a low environmental load as, for example, generating no sulfur oxides or soot and allowing a significant reduction of the amount of nitrogen oxides to be generated. To utilize the DME as a fuel for diesel engines, there are a case of replacing 100% of the light oil with the DME, and a case of mixing the DME with the light oil for utilization.

The case of replacing 100% of the light oil with the DME requires that a fuel supply circuit of a fuel supply system be changed to one provided with pressure resistance and dedicated to the the DME because the DME has a steam pressure of approximately 6 atmospheres (approximately 0.6 MPa) at normal temperature. For this reason, since the case of replacing 100% with the DME requires a system dedicated to the DME, it is difficult to apply this to a system of the conventional technique for supplying a liquid fuel, by retrofitting.

Meanwhile, the case of mixing the DME with the light oil for utilization generally employs a device in which the DME is mixed with the light oil in a mixed fuel tank or the like in advance (see for example Patent Document 1). This device stores 80 to 99 mass% of a liquid fuel such as the light oil and 1 to 20 mass% of the DME in the mixed fuel tank.

The steam pressure of the mixed fuel mixed in such a ratio is lower than the steam pressure in the case where the DME accounts for 100%. For this reason, this makes it possible to liquefy and easily handle the mixed fuel only by pressuring the mixed fuel tank with a light pressure.

However, the case of mixing the DME with the light oil in a mixed fuel tank in advance as in this device requires a mixed fuel tank for a high pressure, which leads to a problem of a high cost. In addition, this case requires a cooling device and a pressurizer to be included in the mixed fuel tank for suppressing vaporization of the mixed fuel.

A more important problem is that no techniques for filling a high-pressure mixed fuel tank with the light oil have not been established. Regarding the above-described device, Patent Document 1 states that the light oil and the DME are stored in a mixed fuel tank to be supplied to an internal combustion engine, but does not have any statement regarding the method of mixing the DME with the light oil, which is a key issue.

Even for the case of mixing the DME with the light oil for utilization, there is a method in which a mixed fuel tank is not used, and two sets of a fuel supply circuit and a fuel injection circuit for the light oil and the DME are mounted. However, this method involves problems such as a high cost due to the double system, an increase in weight, and a deterioration in installability. Alternatively, it is conceivable of supplying the DME to an intake pipe. However, since the DME is a fuel that is likely to be compressed and self-ignite, there is a possibility that the DME could ignite at an unintended timing in an engine cylinder, and combustion control is thus difficult.

PRIOR ART DOCUMENT

PATENT DOCUMENT

Patent Document 1: Japanese patent application Kokai publication No 2011-162589.

SUMMARY OF THE INVENTION

PROBLEM TO BE SOLVED BY THE INVENTION

The present invention has been made in view of the above-described problems, and an object thereof is to provide a mixed fuel supply system for an internal combustion engine, a vehicle, and a mixed fuel supply method for an internal combustion engine, which are capable of supplying a mixed fuel obtained by mixing a liquid fuel and a liquefied gas fuel to an internal combustion engine, by utilizing a system of a conventional technique for supplying a liquid fuel to an internal combustion engine as it is without making significant modifications.

MEANS FOR SOLVING THE PROBLEM

A mixed fuel supply system for an internal combustion engine according to the present invention for solving the above-described problems is a mixed fuel supply system for an internal combustion engine using a mixed fuel obtained by mixing a liquid fuel and a liquefied gas fuel, characterized in that the mixed fuel supply system is provided with a liquid fuel supply system which a liquefied gas fuel storage tank which stores the liquefied gas fuel and a transfer pump which transfers the liquid fuel and a supply pump which supplies the liquid fuel to a fuel injection valve are connected by a transfer path, and was comprised, wherein the liquid fuel supply system is provided of: a liquid fuel storage tank which stores the liquid fuel; a liquefied gas fuel supply path is connected to the transfer path between the transfer pump and the supply pump and supplies the liquefied gas fuel; and a flow regulating valve included the liquefied gas fuel supply path, wherein a supply amount of the liquefied gas fuel is regulated to be lower than half of a total supply amount of the mixed fuel in weight ratio by the flow regulating valve, and the mixed fuel mixed in the transfer path is transferred to the supply pump, and injected from the fuel injection valve.

Note that the supply pump mentioned herein means a fuel injection pump such as an inline injection pump, a distributor injection pump, an individual injection pump, and a unit injector pump, or a supply pump used in an accumulator using a common rail or the like.

Additionally, the liquid fuel supply system means a system which supplies a liquid fuel such as light oil to an internal combustion engine, and is a liquid fuel supply system of a known technique.

In addition, the transfer path between the transfer pump and the supply pump is configured such that a supply pressure of the liquid fuel becomes lower than a steam pressure of the liquefied gas fuel. For example, when the dimethyl ether (DME) is used as the liquefied gas fuel, the supply pressure of the liquid fuel in the transfer path between the transfer pump and the supply pump is lower than approximately 0.62 MPa of the steam pressure of the DME at normal temperature, and is approximately 0.3 MPa, for example. Between the transfer pump and the supply pump, it is possible to easily adjust the supply pressure of the liquid fuel in the transfer path between the transfer pump and the supply pump such that the supply pressure becomes to be lower than the steam pressure of the liquefied gas fuel by controlling the discharge pressure of the transfer pump.

Moreover, the supply amount of the liquefied gas fuel is preferably regulated such that the weight ratio of the liquefied gas fuel becomes constant to the total supply amount of the mixed fuel, which is increased or decreased depending on the operation condition of the internal combustion engine. In addition, the proportion of the supply amount at this time is preferably lower than 50% of the total supply amount in weight ratio. If the proportion of the supply amount of the liquefied gas fuel become equal to or higher than 50% of the total supply amount of the mixed fuel, this requires a high-pressure tank for mixing the liquid fuel and the liquefied gas fuel and also more severe adjustment of the pressures for liquefying the mixed fuel, causing increase in the weight and costs of the system.

More specifically, for example, in a case where the DME is utilized as the liquefied gas fuel, since the calorific value of the DME is approximately 30% lower than the calorific value of the liquid fuel such as light oil, increasing the proportion of the supply amount of the DME requires modifications such as increasing the diameter of injection holes of fuel injection valves to obtain the output of the same level. For this reason, when energy efficiency is taken into consideration, it is more preferable that the supply amount of the liquefied gas fuel be approximately 10% of the total supply amount of the mixed fuel in weight ratio.

Moreover, when the supply amount of the liquefied gas fuel increases relative to the total supply amount of the mixed fuel, the steam pressure of the mixed fuel increases, so that it is necessary to pressurize the mixed fuel in order to transfer the mixed fuel in a liquefied state to the supply pump. For this reason, when suppression of vaporization of the mixed fuel is taken into consideration, it is more preferable that the supply amount of the liquefied gas fuel be approximately 10% of the total supply amount of the mixed fuel in weight ratio.

According to the above-described configuration, only by connecting the liquefied gas fuel supply path in such a manner as to supply the liquefied gas fuel to the transfer path between the transfer pump and the supply pump, where the supply pressure of the liquid fuel is lower than the steam pressure of the liquefied gas fuel, it is possible to mix the liquid fuel and the liquefied gas fuel without adding a pump for transferring the liquefied gas fuel to a liquid fuel supply system for supplying an internal combustion engine with a liquid fuel such as light oil, which has originally been used, or a high-pressure tank for mixing the liquid fuel and the liquefied gas fuel, or the like.

In addition, by regulating the supply amount of the liquefied gas fuel by using the flow regulating valve, it is possible to supply the mixed fuel to the fuel supply pump with the output of the internal combustion engine being hardly decreased and with the steam pressure of the mixed fuel being suppressed to be low in a liquefied state.

In this way, it is possible to supply the mixed fuel obtained by mixing the liquid fuel and the liquefied gas fuel to the internal combustion engine by utilizing the liquid fuel supply system of the conventional technique as it is without making significant modifications.

Since there is no need to provide a tank provided with pressure resistance or a pump for pressurizing the liquefied gas fuel, this system can be inexpensively manufactured, and also since the liquid fuel supply system of the conventional technique is utilized as it is, making retrofitting possible without impairing the conventionally obtained reliability.

A vehicle according to the present invention for solving the above-described problems is a vehicle including the above-described mixed fuel supply system for an internal combustion engine, and configured such that light oil is used as the liquid fuel, and dimethyl ether is used as the liquefied gas fuel. According to this configuration it is possible to enhance the environmental performance by using the mixed fuel obtained by mixing the light oil with the dimethyl ether, which has a high cetane number and having a low environmental load such as generating no sulfur oxides or soot and allowing a significant reduction of the amount of nitrogen oxides to be generated.

In particular, since there is no need to make significant modifications of a system for supplying a liquid fuel to an internal combustion engine, which has originally been provided, the present invention can be more inexpensively provided, and can be applied also to an internal combustion engine that is not equipped with an advanced injection system such as a common rail type.

A mixed fuel supply method for an internal combustion engine according to the present invention for solving the above-described problems is a mixed fuel supply method for an internal combustion engine using a mixed fuel obtained by mixing a liquid fuel and a liquefied gas fuel, characterized in that the mixed fuel supply method for an internal combustion engine comprises: supplying a liquefied gas fuel through a liquefied gas fuel supply path to a transfer path between a transfer pump which transfers a liquid fuel and a supply pump which supplies the liquid fuel to a fuel injection valve; regulating a supply amount of the liquefied gas fuel to be supplied to the transfer path to a proportion lower than half of a total supply amount of the mixed fuel in weight ratio; and transferring the mixed fuel mixed in the transfer path to the supply pump and injecting the mixed fuel from the fuel injection valve.

According to this method, it is possible to supply a mixed fuel obtained by mixing a liquid fuel and a liquefied gas fuel to an internal combustion engine without making significant modifications of a liquid fuel supply system of the conventional technique.

EFFECTS OF THE INVENTION

According to the present invention, the liquefied gas fuel supply path is connected such that the liquefied gas fuel is supplied to the transfer path between the transfer pump and the supply pump, where the supply pressure of the liquid fuel is lower than the steam pressure of the liquefied gas fuel, and the supply amount of the liquefied gas fuel is adjusted by using the flow regulating valve provided in the liquefied gas fuel supply path. This makes it possible to supply the mixed fuel obtained by mixing the liquid fuel and the liquefied gas fuel by utilizing the liquid fuel supply system of the conventional technique as it is without making significant modifications.

BRIEF DESCRIPTION OF THE DRAWINGS

[Fig. 1] Fig. 1 is a schematic diagram illustrating a mixed fuel supply system for an internal combustion engine of a first embodiment according to the present invention.
[Fig. 2] Fig. 2 is a schematic diagram illustrating a mixed fuel supply system for an internal combustion engine of a second embodiment according to the present invention.

MODES FOR CARRYING OUT THE INVENTION

Hereinafter, a mixed fuel supply system for an internal combustion engine, an internal combustion engine, and a fuel supply method for an internal combustion engine of embodiments according to the present invention will be described with reference to the drawings. Note that although in the embodiments, a system for supplying a mixed fuel obtained by mixing light oil as a liquid fuel and dimethyl ether (hereinafter, referred to as DME) as a liquefied gas fuel will be described, for example, it is possible to employ liquefied petroleum gas (LPG), liquefied natural gas (LNG), liquefied butane gas (LBG), liquefied hydrogen fuel, and the like as the liquefied gas fuel. In addition, although a vehicle in which one tank for storing the DME is mounted will be described, the present invention may be applied to a vehicle in which two or more tanks are mounted. Moreover, although an inline-four-cylinder diesel engine will be described as an example of the internal combustion engine, the present invention is not limited in terms of the number and arrangement of cylinders.

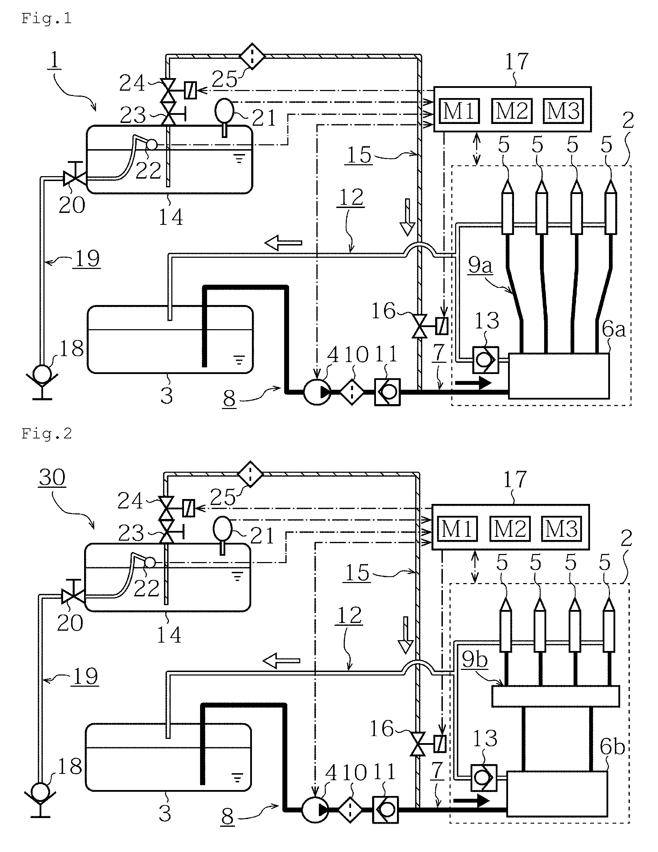

First, a mixed fuel supply system for an internal combustion engine of a first embodiment and a mixed fuel supply system for an internal combustion engine of a second embodiment according to the present invention will be described with reference to Figs. 1 and 2. Each of the mixed fuel supply systems 1 and 30 is a system that supplies a mixed fuel obtained by mixing the light oil as a liquid fuel with the DME (dimethyl ether) as a liquefied gas fuel to an engine (an internal combustion engine) 2.

As illustrated in Fig. 1, the mixed fuel supply system 1 of the first embodiment includes a light oil supply system (a liquid fuel supply system) 8 configured by connecting: a light oil tank (a liquid fuel storage tank) 3 which stores the light oil; a feed pump (a transfer pump) 4 which transfers the light oil; and a fuel injection pump (a supply pump) 6a which supplies fuel to injectors (fuel injection valves) 5, through a transfer path 7.

The light oil supply system 8 is configured to supply the light oil from the light oil tank 3 to the fuel injection pump 6a by using the feed pump 4, and send the light oil from the fuel injection pump 6a to the injectors 5 respectively through pipes 9a. In addition, the transfer path 7 is provided with: a filter 10 which removes impurities in the light oil; and a check valve (a non-return valve) 11 which prevents the light oil from flowing back. Additionally, the light oil supply system 8 includes: a return flow path 12 which returns the fuel remaining in the injectors 5 and the fuel injection pump 6a to the light oil tank 3; and a check valve 13 provided in the return flow path 12.

The fuel injection pump 6a provided in the light oil supply system 8 includes one which pressurizes fuel only with an injection pump such as an inline injection pump, a distributor injection pump, or an individual injection pump, and one having pressurizing mechanisms for individual injectors such as an unit injector pump, and is an injection pump of a known technique which is mechanically driven by receiving a drive force of the engine 2 from a crankshaft, a camshaft, a timing chain, or a timing belt.

Meanwhile, as illustrated in Fig. 2, the mixed fuel supply system 30 of the second embodiment includes a supply pump 6b and a common rail 9b in place of the fuel injection pump 6a and the pipes 9a.

The above-described configurations only have to be a system that supplies light oil to a diesel engine of the conventional technique, and the present invention is not limited to the above-described configurations.

Note that the present invention is a system that allows supply of a mixed fuel of light oil and DME by retrofitting the light oil supply system 8 of the conventional technique as described above. The mixed fuel supply system 1 illustrated in Fig. 1 and the mixed fuel supply system 30 illustrated in Fig. 2 are different only in that the mixed fuel supply system 1 includes the fuel injection pump 6a such as a type injection pump, a distributor injection pump, an individual injection pump, or an unit injector pump, while the mixed fuel supply system 30 includes the supply pump 6b used in an accumulator using the common rail 9b. For this reason, the following description will be made by using the mixed fuel supply system 1 of the first embodiment as an example.

The mixed fuel supply system 1 illustrated in Fig. 1 is configured by providing a DME tank (a liquefied gas fuel storage tank) 14 which stores the DME and a DME supply path (a liquefied gas fuel supply path) 15 which supplies the DME in addition to the configuration of the above-described light oil supply system 8 of the conventional technique, in which the DME supply path 15 is connected to the transfer path 7 between the feed pump 4 and the fuel injection pump 6a, and the DME supply path 15 includes a flow regulating valve 16.

The mixed fuel supply system 1 is configured such that a supply amount $Q_{DME}$ of the DME is regulated to be lower than 50%, and be preferably approximately 10%, of a total supply amount $Q_{fuel}$ of the mixed fuel in weight ratio by the flow regulating valve 16, and the mixed fuel mixed in the transfer path 7 is transferred to the fuel injection pump 6a, and then injected from the injectors 5.

In addition, the mixed fuel supply system 1 includes a CU (a control unit; a control device) 17 which controls discharge flow rate and discharge pressure (feed pressure) of the feed pump 4 as well as the supply amount of the DME by the flow regulating valve 16.

The DME tank 14 is a tank which stores the DME. A pressure P1 inside the DME tank 14 is maintained at a steam pressure P0 of the DME (approximately 0.62 MPa at normal temperature). Since the steam pressure P0 of the DME increases as the temperature increases, the DME tank 14 is desirably disposed at a position where influence of the temperature of the engine 2 is small.

Moreover, the mixed fuel supply system 1 includes a quick coupling 18, a filling path 19, and a filling openable and closable valve 20 as devices to fill the DME tank 14 with the DME. In addition, the mixed fuel supply system 1 includes: a pressure sensor 21 which detects the pressure inside the DME tank 14; and a float sensor (a liquid level sensor) 22 which detects an amount of the DME stored in the DME tank 14, and the pressure sensor 21 and the float sensor 22 are connected to the CU 17.

The DME supply path 15 is a pipe which transfers the DME from the DME tank 14 to the transfer path 7, and includes: the flow regulating valve 16 on the transfer path 7 side, and also a supply openable and closable valve 23, a supply electromagnetic valve 24, and a filter 25 on the DME tank 14 side.

The DME supply path 15 is the pipe connected to the transfer path 7 between the feed pump 4 and the fuel injection pump 6a, and configured such that a supply pressure of the light oil in the transfer path 7 between the feed pump 4 and the fuel injection pump 6a becomes lower than the steam pressure P0 of the DME. The supply pressure of the light oil in the transfer path 7 between the feed pump 4 and the fuel injection pump 6a can be easily adjusted to be lower than the steam pressure P0 of the DME by controlling the feed pressure (the discharge pressure) of the feed pump 4.

Here, the relations between pressures in the mixed fuel supply system 1 will be described. When the steam pressure of the DME is represented by P0, the pressure inside the DME tank 14 is represented by P1, the pressure of the DME to be supplied is represented by P2, the supply pressure of the light oil in the transfer path 7 between the feed pump 4 and the fuel injection pump 6a is represented by P3, and the feed pressure of the feed pump 4 is represented by P4, the relations between the pressures are expressed by the following mathematical formula (1).

[Math. 1]

$$P0 = P1 = P2 > P3 > P4 \qquad \cdots (1)$$

For example, when the steam pressure of the DME is 0.62 MPa, the feed pressure P4 of the feed pump 4 is 0.3 MPa, and the supply pressure P3 in the transfer path 7 between the feed pump 4 and the fuel injection pump 6a is 0.3 MPa+$\alpha$ (provided that 0<$\alpha$<0.32).

With such relations between the pressures, the DME in the DME tank 14 flows through the DME supply path 15 into the transfer path 7 between the feed pump 4 and the fuel injection pump 6a, where the pressure is low, and is mixed with the light oil in the transfer path 7.

Since the DME tank 14 and the DME supply path 15 are included in addition to the light oil supply system 8 of the conventional technique, and the DME supply path 15 is connected to the transfer path 7 between the feed pump 4 and the fuel injection pump 6a, where the pressure is lower than the steam pressure P0 of the DME, the light oil and the DME can be easily mixed in the transfer path 7 without adding a pump for pressurizing and transferring the DME, a high-pressure tank for mixing the light oil and the DME, or the like.

The flow regulating valve 16 is an electromagnetic valve controlled by the CU 17 and capable of adjusting the supply amount $Q_{DME}$ of the DME flowing from the DME supply path 15 into the transfer path 7. The supply amount $Q_{DME}$ of the DME supplied from the DME supply path 15 into the transfer path 7 is regulated by the flow regulating valve 16 such that the supply amount $Q_{DME}$ becomes approximately 10% of the total supply amount $Q_{fuel}$ of the mixed fuel, which is obtained by mixing the light oil and the DME, in weight ratio, depending on the operation condition of the engine 2.

If the supply amount $Q_{DME}$ of the DME is made approximately 10% of the total supply amount $Q_{fuel}$ of the mixed fuel, in a case where a mixed fuel obtained by mixing the light oil with the DME, which has a calorific value approximately 30% lower than the calorific value of the light oil, is injected from the injectors 5, the output of the injected mixed fuel can be regulated to be approximately equal to the output in a case where the light oil accounts for 100%, even without increasing the diameter of injection holes of the injectors 5. For this reason, the environmental performance can be enhanced substantially in the same manner as the case where the light oil accounts for 100%.

In this way, the light oil supply system 8 of the conventional technique can be used as it is without making a modification considering the output of the light oil supply system 8 and a modification considering the steam pressure of the mixed fuel. Thus, a relatively inexpensive system can be provided.

Note that although the supply amount $Q_{DME}$ of the DME is regulated to be approximately 10% of the total supply amount $Q_{fuel}$ of the mixed fuel in weight ratio in this embodiment, the proportion varies depending on the configuration of the light oil supply system 8 of the conventional technique. However, the proportion of the supply amount $Q_{DME}$ of the DME in such a case is a proportion that is lower than half of the total supply amount $Q_{fuel}$ of the mixed fuel in weight ratio, and that does not need significant modifications on the light oil supply system 8 of the conventional technique.

The CU 17 is a microcontroller which electrically controls the injectors 5, the fuel injection pump 6a, the feed pump 4, the flow regulating valve 16, and the supply electromagnetic valve 24, based on the operation condition of the engine 2, the feed pressure P4 of the feed pump 4, the pressure P1 in the DME tank 14, and a filling amount of the DME into the DME tank 14. In addition, the CU 17 includes discharge control means M1, DME flow rate control means M2, and DME supply stop means M3.

The discharge control means M1 is means for controlling the discharge flow rate $Q_{OIL}$ and the feed pressure (the discharge pressure) P4 of the feed pump 4, and adjusts the discharge flow rate $Q_{OIL}$ of the light oil in accordance with the operation condition of the engine 2, and also adjusts the feed pressure P4 at this time such that the feed pressure P4 becomes lower than the pressure P1 in the DME tank 14.

The DME flow rate control means M2 is means for regulating the supply amount $Q_{DME}$ of the DME by using the flow regulating valve 16 such that the weight ratio of the supply amount $Q_{DME}$ becomes constant to the total supply amount $Q_{fuel}$ of the mixed fuel, and regulates the supply amount $Q_{DME}$ of the DME such that the supply amount $Q_{DME}$ becomes approximately 10% of the total supply amount $Q_{fuel}$ of the mixed fuel in weight ratio.

The DME flow rate control means M2 regulates the supply amount $Q_{DME}$ of the DME based on the discharge flow rate $Q_{OIL}$ of the light oil adjusted by the discharge control means M1, or regulates the supply amount $Q_{DME}$ of the DME in accordance with the operation condition of the engine 2.

The DME supply stop means M3 is means for closing the supply electromagnetic valve 24 to stop supply of the DME when the filling amount of the DME into the DME tank 14, which is detected by the float sensor 22, has become equal to or lower than a predetermined amount.

Next, a mixed fuel supply method for the engine 2 according to this embodiment will be described. In a case where the DME tank 14 is filled with a sufficient amount of the DME, the discharge control means M1 first calculates the discharge flow rate $Q_{OIL}$ of the light oil according to the operation condition of the engine 2. Next, the pressure P1 in the DME tank 14 detected by the pressure sensor 21 is inputted.

Next, the discharge control means M1 controls the feed pump 4 such that the feed pressure P4 of the feed pump 4 becomes lower than the pressure P1 in the DME tank 14, and that the calculated discharge flow rate $Q_{OIL}$ is achieved.

Next, the DME flow rate control means M2 controls the flow regulating valve 16 such that the supply amount $Q_{DME}$ of the DME becomes approximately 10% of the total supply amount $Q_{fuel}$ of the mixed fuel in weight ratio.

Once the feed pump 4 is controlled and the flow regulating valve 16 is controlled, the supply pressure P3 of the light oil in the transfer path 7 between the feed pump 4 and the fuel injection pump 6a becomes lower than the pressure P1 in the DME tank 14 and the supply pressure P2 of the DME to be supplied from the DME supply path 15 into the transfer path 7, and also the supply amount $Q_{DME}$ of the DME becomes approximately 10% of the total supply amount $Q_{fuel}$ of the mixed fuel in weight ratio.

Accordingly, the DME is supplied from the DME supply path 15 into the transfer path 7, the light oil and the DME are mixed in the transfer path 7, and the mixed fuel thus mixed in the transfer path 7 is supplied as it is to the fuel injection pump 6a. The mixed fuel is then supplied from the fuel injection pump 6a to the injectors 5, and injected from the injectors 5, so that the fuel supply method is completed.

According to this method, the control to make the feed pressure P4 of the feed pump 4 lower than the pressure P1 in the DME tank 14, that is, lower than the steam pressure P0 of the DME, as well as the control to make the supply amount $Q_{DME}$ of the DME approximately 10% of the total supply amount $Q_{fuel}$ of the mixed fuel are performed, without making significant modifications on the light oil supply system 8 of the conventional technique. In this way, the mixed fuel obtained by mixing the liquid fuel and the liquefied gas fuel can be supplied to the engine 2, and injected from the injectors 5.

Meanwhile, when the filling amount of the DME in the DME tank 14 is reduced to a low level during the above-described fuel supply method, or in similar situations, the DME supply stop means M3 closes the supply electromagnetic valve 24, so that the supply amount $Q_{DME}$ of the DME becomes 0%. In this way, even when the DME tank 14 becomes empty, the vehicle can be driven without stopping the engine 2.

Note that although the above-described mixed fuel supply method uses a method of controlling the feed pressure P4 of the feed pump 4 based on the pressure P1 in the DME tank 14, the feed pressure P4 of the feed pump 4 may be set at a constant value lower than the steam pressure P0 of the DME in advance, such that the supply pressure P3 in the transfer path between the feed pump 4 and the fuel injection pump 6a is always lower than the steam pressure P0 of the DME.

The engine 2 equipped with the mixed fuel supply system 1 can enhance the environmental performance by using the mixed fuel obtained by mixing the light oil with the DME, which has a high cetane number and has a low environmental load as, for example, generating no sulfur oxides or soot and allowing a significant reduction of the amount of nitrogen oxides to be generated.

In particular, since there is no need for making significant modifications on the light oil supply system 8 of the conventional technique, the mixed fuel supply system can be more inexpensively provided, and also can be installed in the engine 2 which does not equipped with any advanced injection system such as a common rail type by retrofitting, without impairing the conventionally obtained reliability.

INDUSTRIAL APPLICABILITY

The mixed fuel supply system for an internal combustion engine of the present invention connects the liquefied gas fuel supply path such that the liquefied gas fuel is supplied to the transfer path between the transfer pump and the supply pump, where the supply pressure of the liquid fuel is lower than the steam pressure of the liquefied gas fuel, and adjusts the supply amount of the liquefied gas fuel by using the flow regulating valve provided in the liquefied gas fuel supply path. This makes it possible to supply the mixed fuel obtained by mixing the liquid fuel and the liquefied gas fuel by utilizing the liquid fuel supply system of the conventional technique as it is without making significant modifications. The mixed fuel supply system for an internal combustion engine thus can be utilized for a vehicle equipped with an engine using a liquefied gas fuel such as DME. In particular, the mixed fuel supply system for an internal combustion engine can inexpensively supply a mixed fuel obtained by mixing a liquefied gas fuel and a light oil to an internal combustion engine that is not equipped with an advanced fuel injection circuit such as a common rail.

EXPLANATION OF REFERENCE NUMERALS

| 1, 30 | mixed fuel supply system |
|---|---|
| 2 | engine (internal combustion engine) |
| 3 | light oil tank (liquid fuel storage tank) |
| 4 | feed pump (transfer pump) |
| 5 | injector (fuel injection valve) |
| 6a | fuel injection pump (supply pump) |
| 6b | supply pump (supply pump) |
| 7 | transfer path |
| 8 | light oil supply system (liquid fuel supply system) |
| 14 | DME tank (liquefied gas fuel storage tank) |
| 15 | DME supply path (liquefied gas fuel supply path) |
| 16 | flow regulating valve |
| 17 | CU (control device) |
| 21 | pressure sensor |
| 22 | float sensor |
| M1 | discharge control means |
| M2 | DME flow rate control means |
| M3 | DME supply stop means |

**Claims**

1. A mixed fuel supply system for an internal combustion engine using a mixed fuel obtained by mixing a liquid fuel and a liquefied gas fuel, **characterized in that**
the mixed fuel supply system is provided with a liquid fuel supply system which a liquefied gas fuel storage tank which stores the liquefied gas fuel and a transfer pump which transfers the liquid fuel and a supply pump which supplies the liquid fuel to a fuel injection valve are connected by a transfer path, and was comprised, wherein the liquid fuel supply system is provided of:

   a liquid fuel storage tank which stores the liquid fuel;
   a liquefied gas fuel supply path is connected to the transfer path between the transfer pump and the supply pump and supplies the liquefied gas fuel; and
   a flow regulating valve included the liquefied gas fuel supply path,
   wherein a supply amount of the liquefied gas fuel is regulated to be lower than half of a total supply amount of the mixed fuel in weight ratio by the flow regulating valve, and
   the mixed fuel mixed in the transfer path is transferred to the supply pump, and injected from the fuel injection valve.

2. A vehicle comprising the mixed fuel supply system for an internal combustion engine according to claim 1, **characterized in that**
light oil is used as the liquid fuel, and
dimethyl ether is used as the liquefied gas fuel.

3. A mixed fuel supply method for an internal combustion engine using a mixed fuel obtained by mixing a liquid fuel and a liquefied gas fuel, **characterized in that**
the mixed fuel supply method for an internal combustion engine comprises:

   supplying a liquefied gas fuel through a liquefied gas fuel supply path to a transfer path between a transfer pump which transfers a liquid fuel and a supply pump which supplies the liquid fuel to a fuel injection valve;
   regulating a supply amount of the liquefied gas fuel to be supplied to the transfer path to a proportion lower than half of a total supply amount of the mixed fuel in weight ratio; and
   transferring the mixed fuel mixed in the transfer path to the supply pump and injecting the mixed fuel from the fuel injection valve.

Fig.1

Fig.2

## INTERNATIONAL SEARCH REPORT

| International application No. |
| --- |
| PCT/JP2014/063805 |

A.  CLASSIFICATION OF SUBJECT MATTER
*F02M37/00*(2006.01)i, *F02D19/08*(2006.01)i, *F02M21/02*(2006.01)i, *F02M69/00* (2006.01)i, *F02M69/14*(2006.01)i

According to International Patent Classification (IPC) or to both national classification and IPC

B.  FIELDS SEARCHED

Minimum documentation searched (classification system followed by classification symbols)
F02M37/00, F02D19/08, F02M21/02, F02M69/00, F02M69/14

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2008-274905 A  (Toyota Motor Corp.), 13 November 2008 (13.11.2008), paragraphs [0024] to [0027]; fig. 1 (Family: none) | 1-3 |
| Y | JP 4072613 B2  (Kabushiki Kaisha S&S Holdings), 09 April 2008 (09.04.2008), paragraph [0025]; fig. 1 (Family: none) | 1-3 |
| Y | JP 2009-121369 A  (Yanmar Co., Ltd.), 04 June 2009 (04.06.2009), paragraph [0020]; fig. 1 & US 2011/0000549 A1    & EP 2208881 A1 & WO 2009/063934 A1 | 1-3 |

☒  Further documents are listed in the continuation of Box C.          ☐  See patent family annex.

| | |
| --- | --- |
| *      Special categories of cited documents:<br>"A"  document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"  document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 03 July, 2014 (03.07.14) | 15 July, 2014 (15.07.14) |

| Name and mailing address of the ISA/<br>      Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2014/063805

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-303651 A  (Hitachi, Ltd.),<br>02 November 1999 (02.11.1999),<br>paragraph [0011]; fig. 1<br>(Family: none) | 1-3 |

Form PCT/ISA/210 (continuation of second sheet) (July 2009)

**EP 3 009 654 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011162589 A